# FASCICULE DE BREVET EUROPEEN

(11) **EP 0 576 355 B1**
(45) Date de publication et mention de la délivrance du brevet: **29.11.1995**
(21) Numéro de dépôt: 93401611.4
(22) Date de dépôt: 23.06.1993
(51) Int. Cl.: F02C 7/042, F02K 7/16

(54) **Réacteur combiné et muni de moyens de commutation entre deux états de fonctionnement**
Umschaltlufteinlassklappen für ein Kombitriebwerk mit zwei unterschiedlichen Betriebsweisen
Changeover valve for a combi jet engine having two operational configurations

(30) Priorité: 24.06.1992 FR 9207712
(43) Date de publication de la demande: 29.12.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Brossier, Pascal Noel, F-77127 Lieusaint (FR); Mazeaud, Georges, F-91330 Yerres (FR); Wurniesky, Pascal Claude, F-77176 Savigny Le Temple (FR)

(56) Documents cités:
- EP-A- 0 358 347
- DE-A- 2 917 303
- FR-A- 2 653 177
- GB-A- 2 027 813
- US-A- 3 016 694

## Description

L'invention concerne un réacteur combiné et muni de moyens de commutation entre deux états de fonctionnement tels qu'un fonctionnement en turboréacteur et un fonctionnement en statoréacteur.

Le fonctionnement en turboréacteur est préféré jusqu'à une vitesse de l'avion d'environ quatre fois la vitesse du son (Mach 4), mais il est nécessaire de passer en mode de statoréacteur pour obtenir des vitesses encore plus élevées (jusqu'à Mach 7 ou Mach 8). Comme l'air atteint alors une température très élevée, on doit lui faire contourner la turbine à gaz qui constitue principalement le turboréacteur et c'est pour cela que la veine du réacteur est divisée sur une section de sa longueur entre une veine centrale de turboréacteur où se trouve la turbine et une veine périphérique entourant la précédente où se trouvent les brûleurs du statoréacteur. Il est cependant nécessaire de prévoir des moyens pour obstruer l'une ou l'autre des deux veines afin de guider tout l'air dans la veine associée au fonctionnement choisi.

On utilise généralement dans l'art antérieur un cône situé au centre de la veine centrale et mobile en translation selon l'axe du réacteur. L'obstruction de la veine centrale est réalisée si on la constitue avec une entrée rétrécie : le cône vient toucher son contour quand il est avancé. Un système de volet est utilisé pour obstruer ou dégager la veine périphérique.

L'invention est relative à un perfectionnement de ce genre de dispositifs et présente en particulier les avantages de permettre un meilleur guidage de l'air dans la veine choisie aussi bien dans un mode que dans l'autre, sans que les moyens d'obstruction entravent l'écoulement dans la veine ouverte.

Le réacteur comprend par conséquent des moyens d'obstruction qui consistent en des volets intérieurs articulés au centre de la veine centrale et des volets extérieurs articulés entre la veine centrale et la veine périphérique, les volets intérieurs ayant une orientation sensiblement axiale dans un premier mode de fonctionnement du réacteur tel que le mode de turboréacteur, les volets extérieurs obstruant alors la veine périphérique, et les volets intérieurs et extérieurs pouvant être tournés et déployés de façon à se joindre par des extrémités opposées à leurs articulations et à prendre une disposition en cône commun obstruant la veine centrale et déviant les gaz vers la veine périphérique, dans l'autre mode de fonctionnement tel que le mode de statoréacteur.

Des systèmes à volets intérieurs se déployant de manière analogue à l'invention existent déjà pour restreindre l'écoulement de l'air dans des moteurs d'avion, mais pas en combinaison avec des volets extérieurs disposés autour d'eux de façon que tous les volets collaborent pour obstruer la veine centrale et guider les gaz vers la veine périphérique pendant le second mode.

Il est avantageux que les volets intérieurs soient composés de couches concentriques articulées entre elles entre l'articulation et un moyen d'actionnement, un dispositif de butée entre les parties étant prévu pour limiter leurs mouvements angulaires. Ces dispositifs peuvent consister en des biellettes munies de liaisons à jeu entre des parties articulées consécutives. L'avantage d'une telle conception est que la courbure des volets internes est différente dans les deux modes pour une optimisation du guidage de l'air dans les deux cas.

On va passer maintenant au commentaire des figures suivantes annexées à titre illustratif et non limitatif et qui représentent une réalisation de l'invention :
- la figure 1 est une vue générale du réacteur,
- la figure 2 est une vue des volets d'obstruction, et
- la figure 3 est également une vue des volets mais en direction de l'axe du réacteur.

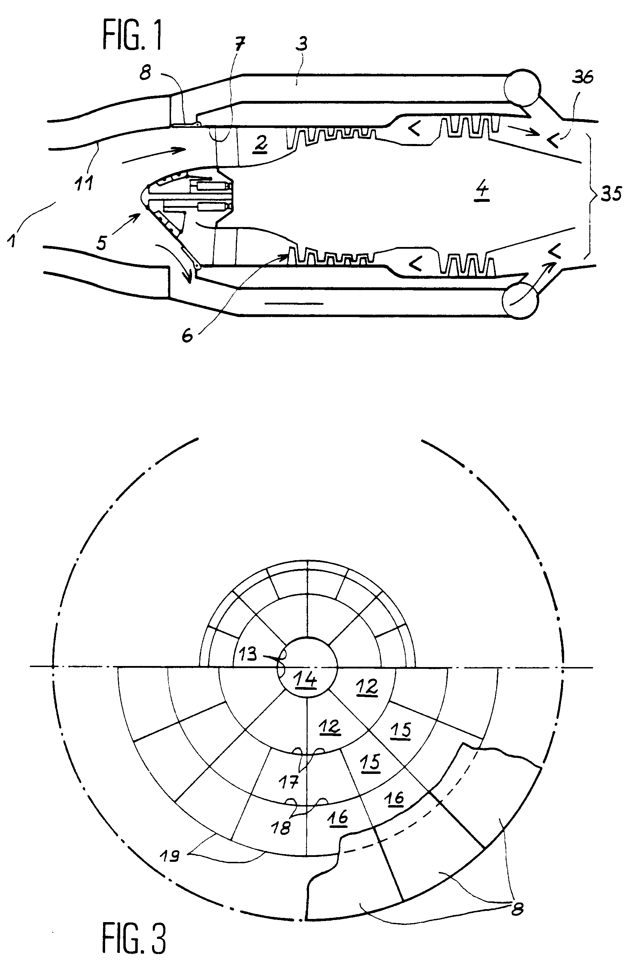

Le réacteur de la figure 1 comprend un manche 1 d'entrée d'air qui est ensuite divisé pour former une veine centrale 2 et une veine périphérique 3 concentrique à la précédente. La veine centrale 2 abrite une turbine à gaz 4 qui constitue l'élément essentiel du turbo-réacteur, et la veine périphérique 3 contourne la turbine à gaz 4 et ne rejoint la veine centrale 2 qu'à la tuyère de sortie des gaz 35. Elle est équipée de brûleurs 36 à cet endroit.

La turbine à gaz 4 comporte un cône d'entrée 5 au centre en direction du manche 1. L'air le contourne avant de se diriger vers les aubes 6 du compresseur. La veine centrale 2 est limitée à l'extérieur par une paroi circulaire 7 que des volets extérieurs 8, orientés en direction axiale et formant ensemble un cylindre, prolongent en fonctionnement de turboréacteur. Ils ferment alors l'entrée de la veine périphérique 3 en touchant par leur extrémité libre 9, opposée à une articulation 10 au bord de la paroi circulaire 7, la paroi extérieure 11 qui délimite le manche d'entrée d'air 1.

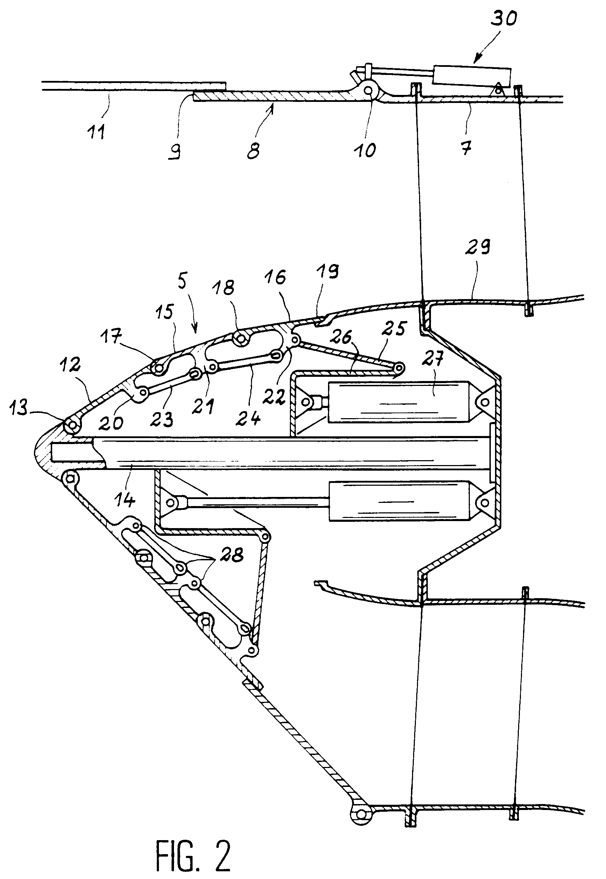

Le cône d'entrée d'air 5 est essentiellement (voir les figures 2 et 3) composé de volets intérieurs dont on peut distinguer trois couches successives et concentriques : des volets de pointe 12 reliés par des articulations 13 à l'extrémité d'un axe central 14 fixe et lié à la turbine à gaz 4, des volets intermédiaires 15 et des volets de base 16. Des articulations 17 unissent une des extrémités des volets intermédiaires 15 aux extrémités des volets de pointe 12 qui sont opposées aux articulations 13, et des articulations 18 relient pareillement une extrémité des volets de base 16 (leur extrémité 19 opposée étant libre) aux extrémités des volets intermédiaires 15 opposées aux articulations 13. Les volets intérieurs 12, 15 et 16 portent des supports de manetons, respectivement 20, 21 et 22 sur leur face orientée vers l'axe 14. Et des biellettes 23, 24 et 25 sont articulées respectivement à des manetons des supports 20 et 21, à des manetons des supports 21 et 22 et à des manetons des supports 22 et de tablettes 26 solidaires de la tige de vérins 27 parallèles à l'axe 14, disposés immédiatement autour de lui et dont le cylindre est lié à la turbine à gaz 4. Les biellettes 23 et 24 sont munies de manilles 28 dont le trou présente un large jeu par rapport au maneton qui est engagé. Il en résulte que les volets intérieurs 12, 15 et 16 peuvent tourner les uns par rapport aux autres dans des limites angulaires définies par des jeux des biellettes 23 et 24. Il existe deux positions de butée : dans l'une d'entre elles. illustrée à la moitié supérieure des figures 1 et 2, les vérins 27 ont la tige rétractée et les volets intérieurs 12, 15 et 16 forment une surface dont la forme sensiblement conique s'effile avec une orientation axiale de plus en plus accusée pour devenir à peu près cylindrique vers l'arrière, où l'extrémité 19 se raccorde à la paroi 29 qui délimite de l'intérieur la veine centrale 3 en la prolongeant presque. Dans cette position, les volets extérieurs 8 prolongent la paroi circulaire 7, se raccordent à la paroi extérieure 11 et ferment l'entrée de la veine périphérique 3. On constate que l'air est guidé avec aisance dans la veine centrale 2 grâce à l'absence d'angles et de modifications brusques de section à la transition entre le manche 1 et la veine centrale 2. Dans l'autre position, illustrée à la moitié inférieure des figures 1 et 2, les vérins 27 sont déployés, ce qui écarte les volets intérieurs 12, 15 et 16 et forme un cône plus trapu et dont les génératrices sont droites, contrairement au cas précédent. Des vérins 30 à l'extérieur de la paroi circulaire 7 ont également été déployés pour faire tourner les volets extérieurs 8 autour des articulations 10 de manière que leurs extrémités libres 9 touchent les extrémités libres 19 des volets de base 16. Tous les volets forment alors un cône commun s'étendant depuis l'axe du réacteur jusqu'à la paroi circulaire 7. L'air provenant du manche 1 est donc propulsé avec aisance vers la veine périphérique 3 dont l'entrée entoure exactement la base du cône ainsi formé.

## Revendications

1. Réacteur comprenant une veine de circulation de gaz divisée sur une section de sa longueur en une veine centrale (2) et une veine périphérique (3), comprenant des volets intérieurs (12, 15, 16) mobiles autour d'articulations intérieures (13) situées au centre de l'entrée de la veine centrale et des volets extérieurs (8) mobiles autour d'articulations extérieures (10) situées à une zone entre la veine centrale et la veine périphérique, les volets intérieurs ayant une orientation sensiblement axiale dans un premier mode de fonctionnement où la veine centrale est ouverte et une orientation conique dans un second mode de fonctionnement où la veine centrale est obstruée, caractérisé en ce que les volets extérieurs (8) sont situés devant l'entrée de la veine périphérique (3) et mobiles de façon qu'ils obstruent l'entrée de la veine périphérique pendant le premier mode de fonctionnement et prennent une orientation conique pendant le second mode de fonctionnement en joignant à une extrémité (11) opposée aux articulations extérieures (10) une extrémité (19) des volets intérieurs opposée aux articulations intérieures (13), les volets intérieurs et extérieurs formant alors une surface commune sensiblement conique qui dévie les gaz vers la veine periphérique et obstrue la veine centrale.

2. Réacteur suivant la revendication 1, caractérisé en ce que les volets intérieurs composent des couches concentriques articulées (17, 18) entre elles entre les articulations intérieures (13) et un moyen d'actionnement (25), des dispositifs de butée (23, 24) entre les couches étant prévus pour limiter leurs mouvements angulaires.

3. Réacteur suivant la revendication 2, caractérisé en ce que les dispositifs de butée consistent en des biellettes munies de liaisons à jeu entre des parties articulées consécutives.

## Claims

1. A jet engine comprising a gas flow path divided over some of its length into a central path (2) and a peripheral path (3), there being provided inner shutters (12, 15, 16) movable around inner pivots (13) disposed at the centre of the entry of the central path and outer shutters (8) movable around outer pivots (10) disposed in a zone between the central and peripheral paths, the inner shutters having a substantially axial orientation in a first operating mode, in which the central path is open, and a conical orientation in a second operating mode in which the central path is blocked, characterised in that the outer shutters (8) are disposed before the entry of the peripheral path (3) and are so movable as to block the entry thereof in the first operating mode and as to take up a conical orientation in the second operating mode by joining at one end (11) remote from the outer pivots (10) with an end (19) of the inner shutters which is remote from the inner pivots (13), the inner and outer shutters then together forming a continuous substantially conical surface which diverts the gases towards the peripheral path and blocks the central path.

2. A jet engine according to claim 1, characterised in that the inner shutters form concentric interarticulated layers (17,18) between the inner pivots (13) and actuating means (25), abutment means (23, 24) being provided between the layers to limit their angular movements.

3. A jet engine according to claim 2, characterised in that the abutment means take the form of loosely connected rods between consecutive pivoted parts.

## Patentansprüche

1. Strahltriebwerk mit einem Gasstromfluß, der in einem Abschnitt seiner Längserstreckung in einen Zentralstrom (2) und einen Randstrom (3) unterteilt ist, aufweisend innere Klappen (12,15,16), die um innere Anlenkungen (13) bewegbar sind, die im Zentrum des Einlasses des Zentralstroms liegen, und äußere Klappen (8), die um äußere Anlenkungen (10) bewegbar sind, die sich in einem Bereich zwischen dem Zentralstrom und dem Randstrom befinden, wobei die inneren Klappen in einer ersten Betriebsart im wesentlichen axial ausgerichtet sind, bei der der Zentralstrom geöffnet ist, und in einer zweiten Betriebsart kegelförmig ausgerichtet sind, bei der der Zentralstrom verschlossen ist,
dadurch **gekennzeichnet**,
daß sich die äußeren Klappen (8) vor dem Einlaß des Randstroms (3) befinden und so bewegbar sind, daß sie den Einlaß des Randstroms in der ersten Betriebsart verschließen und in der zweiten Betriebsart eine kegelförmige Ausrichtung einnehmen, indem sie mit einem Ende (11), das abgewandt von den äußeren Anlenkungen (10) liegt, an ein Ende (19) der inneren Klappen angrenzen, das abgewandt von den inneren Anlenkungen (13) ist, wobei die inneren und äußeren Klappen also eine gemeinsame, im wesentlichen kegelförmige Flache bilden, die das Gas in Richtung des Randstroms ableitet und den Zentralstrom verschließt.

2. Strahltriebwerk nach Anspruch 1,
dadurch **gekennzeichnet**,
daß die inneren Klappen konzentrische zwischen sich angelenkte Reihen (17,18) zwischen den inneren Anlenkungen (13) und einer Betätigungseinrichtung (25) bilden, wobei Anschlagvorrichtungen (23,24) zwischen den Reihen zur Begrenzung ihrer Winkelbewegungen vorgesehen sind.

3. Strahltriebwerk nach Anspruch 2,
dadurch **gekennzeichnet**,
daß die Anschlagvorrichtungen aus Schwingarmen bestehen, die mit Verbindungen mit Spiel zwischen aufeinanderfolgenden angelenkten Abschnitten versehen sind.
